# EUROPÄISCHE PATENTSCHRIFT

(11) **EP 2 648 935 B1**
(45) Veröffentlichungstag und Bekanntmachung des Hinweises auf die Patenterteilung: **08.01.2020**
(21) Anmeldenummer: 11822883.2
(22) Anmeldetag: 08.11.2011
(51) Int. Cl.: H01R 13/639, H01R 13/641, H01R 13/703

(54) **LADEEINRICHTUNG MIT VERRIEGELUNGSERKENNUNG**
CHARGING DEVICE WITH LOCKING DETECTION
DISPOSITIF DE CHARGE AVEC DÉTECTION DE VERROUILLAGE

(30) Priorität: 18.11.2010 DE 102010044138
(43) Veröffentlichungstag der Anmeldung: 16.10.2013
(73) Patentinhaber: Kiekert Aktiengesellschaft, 42579 Heiligenhaus (DE)
(72) Erfinder: KORDOWSKI, Bernhard, 58239 Schwerte (DE); SCHOLZ, Michael, 45136 Essen (DE); WESTERWICK, Volker, 44866 Bochum (DE)
(74) Vertreter: Struck, Norbert
(86) Internationale Anmeldenummer: PCT/DE2011/001952
(87) Internationale Veröffentlichungsnummer: WO 2012/065594

(56) Entgegenhaltungen:
- WO-A1-2010/115927
- WO-A2-2010/065979
- DE-A1- 19 602 281
- DE-A1-102008 035 607
- FR-A1- 2 794 791

## Beschreibung

Die Erfindung betrifft eine Ladeeinrichtung eines Elektrofahrzeugs mit den Merkmalen des Oberbegriffs des Anspruchs 1.

Ein Elektrofahrzeug ist ein Fahrzeug, welches mit Hilfe eines Elektromotors angetrieben wird. Der Elektromotor bezieht seinen Strom über eine Batterie, die im Elektrofahrzeug untergebracht ist. Diese Batterie muss nach einem Entladen wieder aufgeladen werden. Für ein Aufladen der Batterie dient eine Ladeeinrichtung im Sinne der vorliegenden Erfindung. Die Ladeeinrichtung kann Teil des Elektrofahrzeugs oder Teil einer Ladestation sein. Soll die Batterie eines Elektrofahrzeugs aufgeladen werden, so wird die Ladeeinrichtung einer Ladestation mit der Ladeeinrichtung eines Elektrofahrzeugs mechanisch und elektrisch verbunden. Anschließend kann die Batterie mit Hilfe von elektrischem Strom aufgeladen werden, der von der Ladestation geliefert wird.

Soll während des Aufladens einer Batterie eines Elektrofahrzeugs ein unbefugter Zugriff vermieden werden, so muss die mechanische und elektrische Verbindung zwischen zwei Ladeeinrichtungen in dieser Zeit verriegelt werden. Eine dafür geeignete Verriegelungseinrichtung, die vor
einem unbefugten Abnehmen des Ladesteckers zu schützen vermag, geht aus der Druckschrift DE 196 42 687 A1 hervor. Diese Verriegelungseinrichtung
verfügt hierfür über ein Stellglied, mit dem ein Riegel zwecks Verriegelung
des Ladesteckers verstellt werden kann. Der Riegel gelangt für ein Verriegeln in eine Halteöffnung.

Die Druckschrift WO 2010/065979 A2 offenbart ein Hochstromsteckverbindungssystem zum Strombetanken von Elektrofahrzeugen. Es sind Riegel bekannt, die in Ausnehmungen für ein Verriegeln einrasten können, um so zuverlässig zu verhindern, dass ein unter Spannung stehender Stecker abgezogen werden kann. Nachdem ein Fahrzeughalter eigenverantwortlich ein Elektrofahrzeug an eine Stromtankstelle angeschlossen hat, wird eine Verbindung zu einem Zentralrechner hergestellt. Es werden Daten überprüft. Bei positiver Überprüfung der Daten wird der Vorgang zur Strombetankung gestartet. U. a. Verriegelungen werden in einem letzten Schritt überprüft und überwacht.

Die Druckschrift WO 2010/115927 A1 offenbart eine Ladekabelverriegelungsvorrichtung für Elektrofahrzeuge mit einer Signalisierungseinrichtung. Beim Aktivieren einer Verschlusseinrichtung wird ein Aktivierungssignal an die Signalisierungseinrichtung übermittelt. Die Signalisierungseinrichtung übermittelt im Anschluss daran ein Verriegelungssignal zur Verriegelung des Ladekabels an die Ladestation. Empfängt eine Empfangseinrichtung der Ladestation von der Signalisierungseinrichtung das Verriegelungssignal, so bewirkt die Empfangseinrichtung in der Ladestation eine Verriegelung des Ladekabels an der Ladestation und damit ein Bewegen eines Riegels in Richtung Verriegelungsstellung.

Die Druckschrift DE 196 02 281 A1 offenbart Kontaktöffnungen oder Kontaktschließungen durch Zusammenstecken von elektrischen Steckerteilen. Hierdurch werden Signalunterbrechungen oder Signalabgaben bewirkt. Mithilfe dieser Signalunterbrechungen oder Signalabgaben werden Verriegelungsvorgänge durchgeführt.

Es ist Aufgabe der vorliegenden Erfindung, eine Ladeeinrichtung eines Elektrofahrzeugs zu schaffen, die besonders zuverlässig vor unbefugtem Zugriff zu schützen vermag.

Zur Lösung Aufgabe umfasst eine Ladeeinrichtung die Merkmale des Anspruchs 1. Vorteilhafte Ausgestaltungen sind den Unteransprüchen zu entnehmen.

Die beanspruchte Ladeeinrichtung für ein Elektrofahrzeug weist einen Riegel für ein Verriegeln einer Verbindung zwischen der Ladeeinrichtung und einer weiteren Ladeeinrichtung auf. Wird die anspruchsgemäße Ladeeinrichtung mit einer weiteren Ladeeinrichtung für ein Aufladen mechanisch verbunden, so wird diese mechanische Verbindung anschließend verriegelt, indem ein entsprechendes Ende des Riegels in eine Haltöffnung der weiteren Ladeeinrichtung hinein bewegt wird. Eine solche Halteöffnung kann beispielsweise durch einen heraus gebrochenen, der Verriegelung dienenden Steg (nachfolgend "Verriegelungssteg" genannt) so beschädigt sein, dass eine Verriegelung nicht mehr möglich ist. Es ist daher eine Einrichtung vorgesehen, die ein Bewegen des Riegels in Richtung Verriegelungsstellung zu verhindern vermag, wenn die Halteöffnung in einer solchen Weise beschädigt ist. Eine in vorgenannter Weise beschädigte Verriegelung bleibt folglich grundsätzlich nicht unbemerkt. Ein Aufladen setzt damit grundsätzlich eine hinreichend unbeschädigte, ordnungsgemäße Verriegelung der beiden beteiligten Ladeeinrichtungen voraus.

Es ist nicht erforderlich und auch nicht angestrebt, dass jede beliebige Beschädigung der Halteöffnung bereits dazu führt, dass ein Bewegen des Riegels in Richtung Verriegelungsstellung verhindert wird. Es wird statt dessen angestrebt, dass zumindest solche Beschädigungen der Halteöffnung ein Verhindern der Bewegung des Riegels in Richtung Verriegelungsstellung zur Folge haben, die ein Verriegeln einer mechanischen Verbindung zwischen zwei Ladeeinrichtungen nicht mehr ermöglichen.

Die Einrichtung in einer nicht unter die Erfindung fallenden Ausführung kann einen elektrischen Taster bzw. Mikroschalter umfassen, der durch den vorgenannten Verriegelungssteg der Halteöffnung betätigt wird, wenn zwei Ladeeinrichtungen mechanisch für ein Aufladen miteinander verbunden werden, Ist dieser Verriegelungssteg herausgebrochen, so entfällt die Betätigung des Tasters bzw. Mikroschalters. Das dann fehlende elektrische Signal hat insbesondere zur Folge, dass das weitere für ein Aufladen erforderliche Geschehen unterbrochen wird und ein Aufladen somit nicht stattfinden kann. Das Betätigen des Mikroschalters ist also eine Voraussetzung dafür, dass ein Aufladen der Batterie des Elektrofahrzeugs ermöglicht wird oder aber zumindest dafür, dass verriegelt wird.

In einer Ausführungsform umfasst die Ladeeinrichtung einen Hebel, der durch den genannten Verriegelungssteg der Halteöffnung von einer Ausgangsstellung in eine Endstellung bewegt wird, wenn die beanspruchte Ladeeinrichtung mit einer weiteren Ladeeinrichtung mechanisch verbunden wird. Die Ladeeinrichtung ist darüber hinaus so beschaffen, dass das Verriegeln erst möglich ist, wenn der Hebel seine Endstellung erreicht hat. In der Endstellung betätigt der Hebel beispielsweise einen elektrischen Taster. Erst das damit ausgelöste elektrische Signal ermöglicht oder initiiert beispielsweise dann das Verriegeln der beiden Ladeeinrichtungen. Das Verriegeln wiederum stellt dann bevorzugt eine Voraussetzung dafür dar, dass aufgeladen werden kann.

In einer Ausführungsform der Erfindung blockiert der vorgenannte Hebel in der Ausgangsstellung mechanisch den Riegel, so dass dieser nicht in seine Verriegelungsstellung gelangen kann. Erst durch Bewegen des Hebels in seine Endstellung wird die Blockade aufgehoben und so ein Verriegeln ermöglicht. Es handelt sich bei dieser Ausführungsform um eine rein mechanische Lösung, die im Fall einer entsprechenden Beschädigung der Halteöffnung ein Bewegen des Riegels in Richtung Verriegelungsstellung zu verhindern vermag. Die Abhängigkeit von elektrischen Einrichtungen wird entsprechend reduziert und der Energiebedarf für ein mechanisches Verbinden von zwei Ladeeinrichtungen entsprechend gering gehalten. Den Energiebedarf für ein mechanisches Verbinden zu minimieren, ist insbesondere dann von Vorteil, wenn die anspruchsgemäße Ladeeinrichtung Teil des Elektrofahrzeugs ist und Strom von der Batterie des Elektrofahrzeugs erhalten müsste. Insbesondere in diesem Fall ist schließlich mit den Ressourcen der entsprechend entladenen Batterie besonders sparsam umzugehen, was diese Ausführungsform ermöglicht.

In einer Ausführungsform der Erfindung verfügt der vorgenannte Hebel über ein Langloch, in welches ein vom Riegel abstehender Bolzen hineinreicht. Der Verlauf des Langlochs ist so, dass das Langloch ein Verriegeln in der Ausgangsstellung des Hebels blockiert und ein Verriegeln ermöglicht, wenn der der Hebel in seine Endstellung bewegt worden ist. Insbesondere verläuft das Langloch aus diesem Grund geeignet abgewinkelt. Der erste Bereich auf der einen Seite des Winkels wirkt dann blockierend. Der daran angrenzende Bereich ermöglicht das Verriegeln.

In einer Ausführungsform der Erfindung verfügt der Hebel über eine seitlich abstehende Abschirmung, die den Zugang zu der Halteöffnung abschirmt, wenn sich der Hebel in seiner Ausgangsstellung befindet. Wird der Hebel in seine Endstellung verschwenkt oder anders in die Endstellung hinein bewegt, so wird damit auch die Abschirmung so weg bewegt, dass der Zugang zur Halteöffnung freigegeben wird. Erst nach einer solche Freigabe kann der Riegel in seine verriegelnde Stellung bewegt werden.

In einer Ausführungsform verfügt der Hebel über eine Nase, die sich stets innerhalb der Bewegungsebene des Hebels befindet. In der Ausgangsstellung kann die Nase den Zugang zur Halteöffnung blockieren, so dass der Riegel dann nicht verriegeln kann. Erst wenn der Hebel und damit auch die Nase wegbewegt worden ist und sich der Hebel dann in seiner Endstellung befindet, kann der Riegel in seine verriegelnde Stellung hinein bewegt werden. Es ist aber auch möglich, dass von der Ausgangsstellung ausgehend erst eine anfängliche Drehbewegung des Hebels zur Folge hat, dass die Nase zum Beispiel vor einen seitlich abstehenden Bolzen des Riegels gelangt. Hat nun beispielsweise ein Mikroschalter bzw. Taster die anfängliche Drehbewegung registriert, so kann ein damit einhergehendes Signal als Steuerung oder Start der Bewegung des Riegels von seiner nicht-verriegelnden Stellung in Richtung verriegelnde Stellung genutzt werden. Der genannte vom Riegel abstehende Bolzen dreht dann den Hebel weiter, bis die Endstellung erreicht ist. Das weitere Drehen kann wiederum von dem bereits genannten Mikroschalter detektiert werden, der so zugleich das Erreichen der verriegelnden Stellung zu erkennen und beispielsweise eine weitere Bewegung oder Krafteinwirkung auf den Riegel zu stoppen vermag.

In einer Ausführungsform ist der Riegel hakenförmig, so zum Beispiel L-förmig und weist im Fall der L-Form folglich eine lange und eine kurze Flanke auf. Beide Flanken schließen zumindest näherungsweise einen rechten Winkel ein. Ein Ende des Hakens, so zum Beispiel die kurze Flanke im Fall der L-Form kann in die Halteöffnung für ein Verriegeln hinein bewegt werden. Zumindest nahe beim anderen Ende des Hakens kann der Riegel verschwenkbar gelagert sein, um den Riegel zwischen seiner verriegelnden Stellung und seiner nicht-verriegelnden Stellung bewegen zu können.

Auf das vorgenannte schwenkbar gelagerte Ende des Hakens wirkt bevorzugt ein elektrischer Antrieb ein, um den Riegel von seiner verriegelnden Stellung in seine nicht-verriegelnde Stellung bewegen zu können. Diese Bewegung wird nach einem Aufladen der Batterie eines Elektrofahrzeugs durchgeführt, um die beiden beteiligten Ladeeinrichtungen wieder voneinander lösen zu können. Auch die Batterie des Elektrofahrzeugs kann dann problemlos genügend Strom für eine solche Riegelbewegung zur Verfügung stellen, so dass ein komfortabler, elektrischer Antrieb dann problemlos möglich ist.

Von der vorliegenden Erfindung ist aber auch der Fall umfasst, dass der Riegel durch einen elektrischen Antrieb zwischen der verriegelnden Stellung und der nicht-verriegelnden Stellung hin und her bewegt werden kann.

In einer Ausführungsform der Erfindung verfügt der Hebel über einen Durchlass für den Riegel in der Endstellung. Befindet sich der Hebel in seiner Ausgangsstellung, so ist der Durchlass räumlich anders platziert, so dass der Riegel nicht in die Halteöffnung hinein bewegt werden kann. Diese Ausführungsform erfordert einen relativ geringen Bauraum.

In einer Ausführungsform der Erfindung umfasst die Ladeeinrichtung eine Mechanik, die den Riegel von seiner nicht verriegelnden Stellung in seine verriegelnde Stellung zu bewegen vermag. Es kann sich dabei um eine vorgespannte Feder handeln, die den Riegel in Richtung verriegelnde Stellung drückt oder zieht. Diese Ausführungsform trägt weiter dazu bei, dass unmittelbar vor dem Aufladen kein Strom der Batterie des Elektrofahrzeugs verbraucht werden muss und zwar auch dann nicht, wenn die Ladeeinrichtung Teil des Elektrofahrzeugs ist.

In einer Ausführungsform der Erfindung gibt es ein oder mehrere elektrische Mikroschalter oder elektrische Taster, mit der die Stellung des Hebels ermittelt werden kann. In Abhängigkeit davon können elektrische Antriebe für den Hebel gesteuert werden.

Nachfolgend wird die Erfindung anhand von Figuren näher erläutert.

Es zeigen:
- Figur 1:: Ladeeinrichtung mit zwei Mikroschaltern, welche nicht unter die Erfindung fällt
- Figur2:: Ladeeinrichtung mit schwenkbarem Hebel und Abschirmung
- Figur 3:: Ladeeinrichtung mit schwenkbarem Hebel und Durchgang im Hebel
- Figuren 4a und 4b:: Ladeeinrichtung mit Hebel nebst Nase
- Figur 5:: Ladeeinrichtung mit Hebel und Langloch

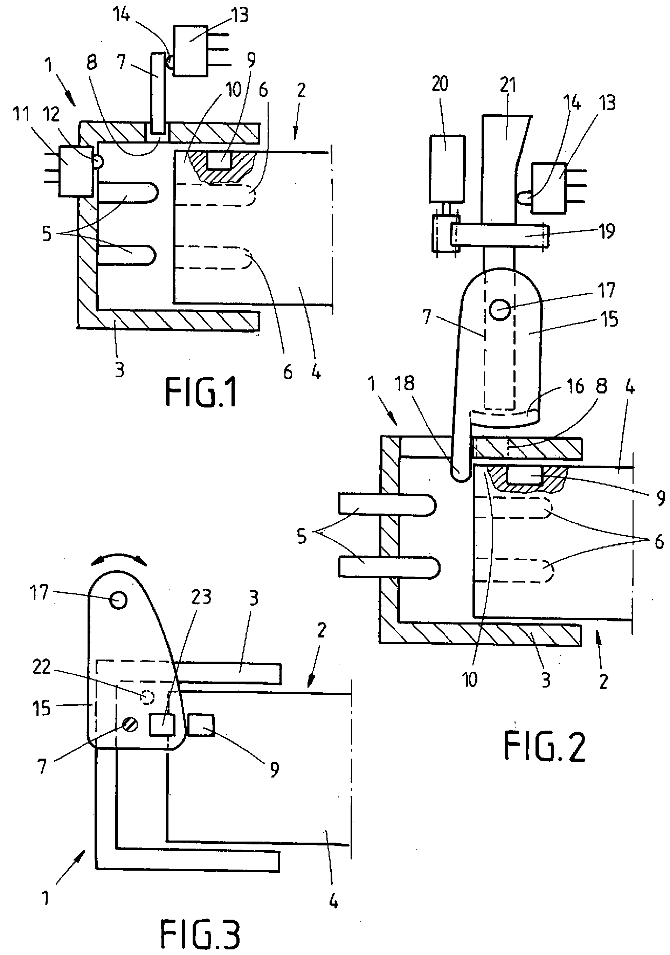

Figur 1 zeigt eine Ladeeinrichtung 1 eines Elektrofahrzeugs, welche nicht unter die Erfindung fällt, die mit einer weiteren Ladeeinrichtung 2 einer Ladestation verbunden werden soll. Die Ladeeinrichtung 1 umfasst ein Gehäuse 3. in weiches das Gehäuse 4 der Ladeeinrichtung 2 hineingesteckt werden kann. Am Grund des Gehäuses 3 umfasst die Ladeeinrichtung 1 eine Mehrzahl von elektrischen Kontaktstiften 5, die dem Aufladen mit Gleichstrom und/ oder Wechselstrom dienen. Die elektrischen Kontaktstifte 5 sind entweder fest mit dem Gehäuse 3 verbunden oder können beispielsweise durch einen elektrischen Antrieb für ein elektrisches Verbinden entlang ihrer Längsachse bewegt werden. Die weitere Ladeeinrichtung 2 umfasst korrespondierende elektrische Kontaktbuchsen 6, in die die elektrischen Kontaktstifte 5 wöhrend eines mechanischen Verbindens oder im Anschluss an eine Verriegelung einer solchen mechanischen Verbindung hinein bewegt werden, um so eine elektrische Verbindung zwischen den beiden Ladeeinrichtungen 1 und 2 zu schaffen. Die Ladeeinrichtung 1 umfasst einen Riegel 7, der seitlich außen am Gehäuse 3 angebracht ist. Die entsprechende Gehäusewand 3 weist eine Öffnung 8 für den Riegel 7 auf, durch den der Riegel 7 hindurchbewegt werden kann. Die weitere Ladeeinrichtung 2 umfasst seitlich im Gehäuse 4 eine Halteöffnung 9 auf. Wird die weitere Ladeeinrichtung 2 in das Gehäuse 3 der Ladeeinrichtung 1 gesteckt, so kann der Riegel 7 durch die Öffnung 8 hindurch in die Halteöffnung 9 hinein bewegt werden. Die beiden Ladeeinrichtungen 1 und 2 sind dann sowohl mechanisch miteinander verbunden als auch verriegelt. Für das Verriegeln ist u. a. ein Verriegelungssteg 10 verantwortlich, der an die Halteöffnung 9 an der Seite angrenzt, die dem Grund des Gehäuses 3 zugewandt ist. Am Grund des Gehäuses 3 der Ladeeinrichtung 1 befindet sich ein Mikroschalter 11 mit einer Taste 12, die in das Innere des Gehäuses 3 hinein reicht. Wird die weitere Ladeeinrichtung 2 in das Gehäuse 3 der Ladeeinrichtung 1 hineingesteckt, so erreicht schließlich der Verriegelungssteg 10 den Taster 12 und drückt diesen in den Mikroschalter 11 hinein. Auf diese Weise wird ein elektrischer Kontakt ausgelöst. Der elektrische Kontakt bewirkt, dass der Riegel 7 von seiner nicht-verriegelnden Stellung in die verriegelnde Stellung bewegt wird. Im Anschluss daran ist also die mechanische Verbindung zwischen den beiden Ladeeinrichtungen 1 und 2 verriegelt worden.

Ist der Verriegelungssteg 10 heraus gebrochen worden, so kann der Taster 12 des Mikroschalters 11 nicht mehr betätigt werden. Es wird so verhindert, dass der Riegel 7 in seine verriegelnde Stellung bewegt wird.

Bevorzugt sind die elektrischen Kontaktstifte 5 beweglich und können mit ihren kontaktierenden Enden vom Grund des Gehäuses 3 für ein elektrisches Verbinden in das Innere hinein bewegt werden. Diese Bewegung findet insbesondere mittels eines elektrischen Antriebs gesteuert statt und zwar erst dann, wenn der Riegel 7 in seine verriegelnde Stellung bewegt worden ist. Zu diesem Zweck kann es einen weiteren Mikroschalter 13 geben, der die Stellung des Riegels 7 zu detektieren vermag. Ist beispielsweise der Riegel 7 von seiner nicht-verriegelnden Stellung in seine verriegelnde Stellung bewegt worden, so wird beispielsweise ein Taster 14 frei gegeben, der einen elektrischen Impuls bewirkt. Dieser elektrische Impuls bewirkt dann, dass die elektrischen Kontaktstifte 5 in Richtung elektrische Kontaktbuchsen 6 bewegt werden und zwar in diese hinein. Haben die elektrischen Kontaktstifte 5 ihre Endstellung in den elektrischen Kontaktbuchsen 6 eingenommen, so ist eine elektrische Verbindung zwischen den elektrischen Kontaktelementen 5 und 6 hergestellt. Im Anschluss daran kann aufgeladen werden.

Sind die elektrischen Kontaktstifte 5 unbeweglich, so kann der Mikroschalter 13 dazu verwendet werden, dass elektronisch gesteuert eine Aufladen erst dann möglich ist, wenn der Riegel 7 in seine verriegelnde Stellung bewegt worden ist. Ist dies nicht der Fall, so wird ein Aufladen beispielsweise elektronisch blockiert.

Der Mikroschalter 11 der Figur 1 kann sich auch seitlich am Gehäuse 3 befinden und zwar benachbart zur Öffnung 8 sowie benachbart zum Grund des Gehäuses 3, um so das Vorhandensein des Stegs 10 detektieren zu können. Der Taster 12 reicht dann wiederum in das Gehäuse 3 hinein.

In der Figur 2 wird eine weitere Ausführungsform der vorliegenden Erfindung gezeigt. In das Gehäuse 3 einer Ladeeinrichtung 1 wird das Gehäuse 4 einer weiteren Ladeeinrichtung 2 hineingesteckt. Wiederum ist das Gehäuse 4 wie im Fall der Figur 1 noch nicht vollständig hineingesteckt worden. Anstelle eines Mikroschalters 11 umfasst die Ladeeinrichtung 1 einen Hebel 15, der sich in der Figur 2 in seiner Ausgangsstellung befindet. Vom Hebel 15 steht in die Papierebene hinein eine Abschirmung 16 ab. Die Abschirmung 16 versperrt den Zugang zur Öffnung bzw. Durchführung 8 des Gehäuses 3. Im Fall der Figur 2 befindet sich ein Riegel 7 teilweise hinter dem Hebel 15. Die Abschirmung 16 verhindert, dass der Riegel 7 durch die Öffnung 8 hindurchbewegt werden kann. Der Hebel 15 kann um die Achse 17 gedreht bzw. verschwenkt werden. Der Hebel 15 umfasst einen Vorsprung 18, der in das Gehäuse 3 hineinreicht. Der Vorsprung 18 ist so platziert, dass dieser vom Verriegelungssteg 10 erfasst und bewegt werden kann. Der Vorsprung 18 reicht in der Ausgangsstellung des Hebels 18 seitlich in den Innenraum des Gehäuses 3 wie dargestellt hinein. Bevorzugt ist der Vorsprung 18 so dimensioniert, dass dieser in der Endstellung des Hebels seitlich aus dem Innenraum praktisch vollständig heraus geschwenkt ist und dann insbesondere seitlich an dem Gehäuse 4 anliegt und nicht mehr wie in Figur 2 gezeigt am Kopfende des Gehäuses 4. Es wird dann eine übermäßig große Bauraumtiefe der Ladeeinrichtung 1 vermieden. Wird die weitere Verriegelungseinrichtung 2 vollständig in das Gehäuse 3 der Verriegelungseinrichtung 1 hinein bewegt, so wird so der Hebel 15 von der gezeigten Ausgangsstellung in die Endstellung verschwenkt. Hat der Hebel 15 seine Endstellung erreicht, so ist dann die Abschirmung 16 von der Öffnung 8 weggeschwenkt worden. Es ist dann möglich, den Riegel 7 durch die Öffnung 8 hindurch in die Halteöffnung 9 hinein zu bewegen, um so die beiden Ladeeinrichtungen 1 und 2 miteinander zu verriegeln.

Ist der Verriegelungssteg 10 herausgebrochen worden, so wird der Vorsprung 18 und damit der Hebel 15 nicht verschwenkt und zwar in Richtung Endstellung. Die Abschirmung 16 verhindert dann dauerhaft, dass der Riegel 7 in seine Verriegelungsstellung hinein bewegt werden kann.

Der Riegel 7 kann als Spindel ausgestaltet sein, die verschoben, aber nicht verdreht werden kann. Es gibt dann eine Spindelmutter 19, die verdreht, aber nicht verschoben werden kann. Wird die Spindelmutter 19 mit Hilfe eines elektrischen Antriebs 20, beispielsweise umfassend einen Elektromotor und ein Ritzel oder Zahnrad, gedreht, so wird der Riegel 7 entsprechend bewegt und zwar zwischen seiner nicht-verriegelnden Stellung und seiner verriegelnden Stellung.

Wiederum kann ein Mikroschalter 13 vorgesehen sein, der durch ein verbreitertes Ende 21 des Riegels 7 betätigt werden kann, wenn der Riegel 7 seine verriegelnde Stellung erreicht hat. Mit Hilfe des Mikroschalters 13 kann also die Stellung des Riegels 7 detektiert werden. Vorzugsweise kann ein Ladevorgang erst dann begonnen werden, wenn so ermittelt worden ist, dass sich der Riegel 7 in seiner verriegelnden Stellung befindet.

In der Figur 2 wird der Fall gezeigt, dass Kontaktstifte 5 sich noch nicht in einer Stellung befinden, um mit den Kontaktbuchsen 6 elektrisch kontaktiert werden zu können. Diese elektrischen Kontaktstifte 5 können in Richtung elektrische Kontaktbuchsen 6 in diese hinein bewegt werden, sobald die mechanische Verbindung zwischen den beiden Ladeeinrichtungen 1 und 2 verriegelt worden ist. Der Mikroschalter 13 kann dazu verwendet werden, ein solches Verfahren der elektrischen Kontaktstifte 5 in die kontaktierende Stellung hinein zu bewirken, sobald der Riegel 7 in seine verriegelnde Stellung hinein bewegt worden ist.

Der Hebel 15 kann mit Hilfe einer nicht gezeigten Feder in Richtung seiner Ausgangsstellung vorgespannt sein. Wird die weitere Ladeeinrichtung 2 im Anschluss an ein Aufladen sowie im Anschluss an ein Entriegeln aus dem Gehäuse 3 der Ladeeinrichtung 1 herausgezogen, so gelangt der Hebel 15 aufgrund der vorgespannten Feder in seine in der Figur 2 gezeigte Ausgangsstellung zurück.

In der Figur 3 wird eine weitere Ausführungsform der Erfindung skizziert. Gezeigt wird eine Aufsicht von oben auf die Halteöffnung 9 im Gehäuse 4 der weiteren Ladeeinrichtung. Die Ladeeinrichtung 1 verfügt wiederum über einen Hebel 15, der sich in der Ausgangsstellung befindet, und der den im Querschnitt gezeigten Riegel 7 daran hindert, durch eine Öffnung 3 des Hebels 15 hindurch bewegt zu werden. Der um die Achse 17 schwenkbar gelagerte Hebel 15 verfügt über einen Bolzen 22, der in das Innere des Gehäuses 3 hineinreicht. Wird das Gehäuse 4 der weiteren Ladeeinrichtung 2 in das Gehäuse 3 der Ladeeinrichtung 1 hineingesteckt, so erreicht das Gehäuse 4 schließlich diesen abstehenden Bolzen 22 und verschwenkt anschließend den Bolzen zusammen mit dem Hebel 15 von seiner gezeigten Ausgangsstellung in die Endstellung. Hat der Hebel 15 seine Endstellung erreicht, so fluchtet die Durchgangsöffnung 23 im Hebel 15 mit einer gegebenenfalls vorhandenen Öffnung im Gehäuse 3 sowie mit der Halteöffnung 9. Der Riegel 7 kann dann durch die entsprechenden Öffnungen hindurch in die Halteöffnung 9 für ein Verriegeln der mechanischen Verbindung hinein bewegt werden.

Diese Ausführungsform erfordert besonders wenig Bauraum. Der Hebel 15 kann wiederum mit Hilfe einer vorgespannten Feder, die nicht gezeigt wird, von der Endstellung in die Ausgangsstellung zurückbewegt werden, sobald das Gehäuse 4 der weiteren Ladeeinrichtung aus dem Gehäuse 3 wieder herausgezogen wird.

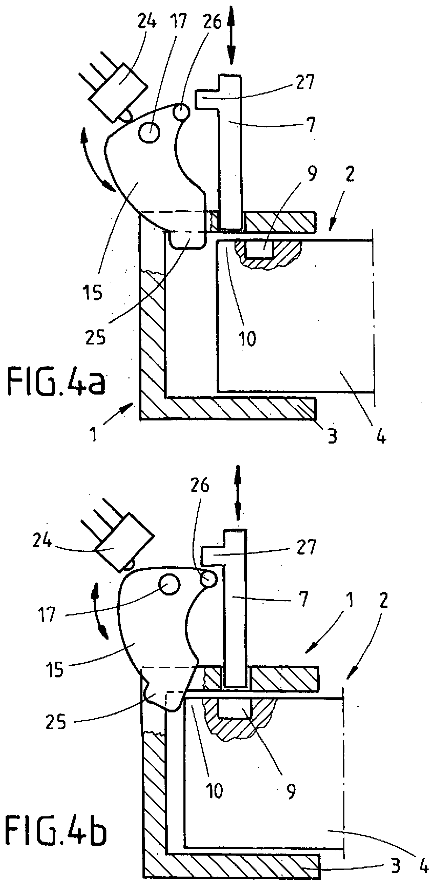

Eine besonders unempfindliche Ausführungsform wird in den Figuren 4a und 4b dargestellt. Diese Ausführungsform verfügt über einen Mikroschalter 24, der die Stellung des Hebels 15 zu detektieren vermag. In der Figur 4a wird die Ausgangsstellung des Hebels 15 dargestellt. Wird die weitere Ladeeinrichtung 2 in das Gehäuse 3 der ersten Ladeeinrichtung 1 hinein gesteckt, so erfasst der Steg 10 schließlich ein Ende 25 des Hebels 15 und verdreht so den Hebel 15 in die Endstellung, die in der Figur 4b gezeigt wird. In der Endstellung gibt es eine Nase 26 des Hebels 15, die in dieser Endstellung, nicht aber in der Ausgangsstellung von einem seitlich abstehenden Bolzen 27 des Riegels 7 erfasst werden kann. Wird der Riegel 7 nun initiiert durch den Mikroschalter 24 in seine verriegelnde Stellung bewegt, so erfasst der Bolzen 27 die Nase 26 und dreht den Hebel 15 über seine Endstellung hinaus. Das Zusammenspiel zwischen Hebel 15 und Mikrotaster 24 ist bevorzugt so ausgestaltet, dass auch diese weitere Drehung registriert werden kann. Mit nur einem Mikroschalter 24 wird so das Erreichen der Endstellung detektiert wie auch das Erreichen der Verriegelungsstellung durch den Riegel 7.

Ist der Steg 10 abgebrochen, so kann der Hebel 15 nicht in seine Endstellung verschwenkt werden. Es entfällt dann ein entsprechendes Abtastsignal des Mikroschalters 24. Fehlt ein solches Abtastsignal, so unterbleibt das Bewegen des Riegels 7 in seine verriegelnde Stellung hinein und/oder es wird elektronisch verhindert, dass die Batterie eines Elektrofahrzeugs aufgeladen werden kann.

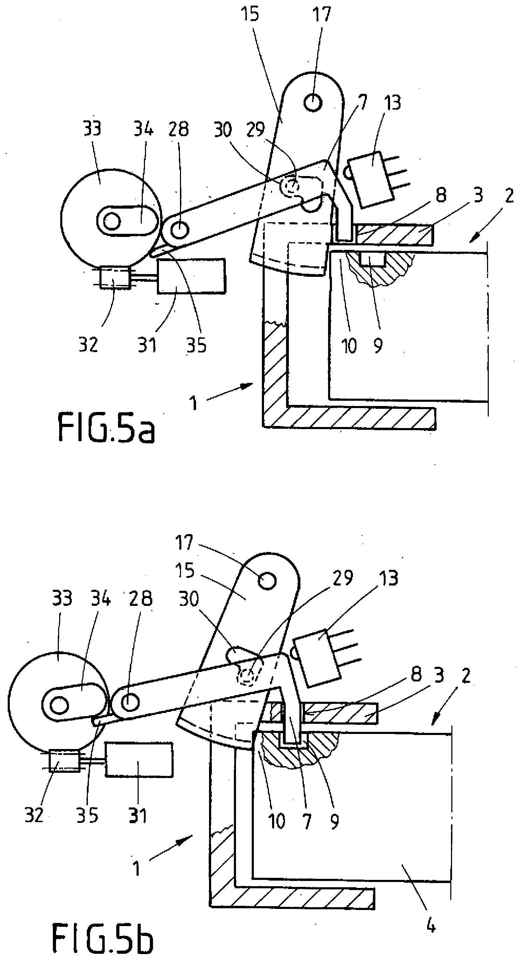

In den Figuren 5a und 5b wird eine weitere Ausführungsform der Erfindung gezeigt. Der Riegel 7 ist L-förmig gestaltet und kann um eine Achse 28 verschwenkt werden. Der Riegel 7 verfügt über einen seitlich abstehenden Bolzen 29, der in ein winkelförmig verlaufendes Langloch 30 des Hebels 15 hineinreicht. In der Figur 5a wird der Hebel 15 in seiner Ausgangsstellung gezeigt. Ein Ende des Hebels 15 reicht in das Innere des Gehäuses 3 der Ladeeinrichtung 1 hinein. Der Bolzen 29 befindet sich dann in einem Bereich des Langlochs 30, der verhindert, dass der Riegel 7 beispielsweise aufgrund einer entsprechend vorgespannten Feder durch die Öffnung 8 in der Seitenwand des Gehäuses 3 hindurch bewegt werden kann. Wird der Hebel 15 durch den Verriegelungssteg 10 von der in der Figur 5a gezeigten Ausgangsstellung in die in der Figur 5b gezeigten Endstellung bewegt, so gelangt der Bolzen 29 in einen Bereich des Langlochs 30 hinein, der eine Bewegung des Riegels 7 durch die Öffnung 8 hindurch in die Halteöffnung 9 hinein erlaubt, wie dies in der Figur 5b dargestellt wird. Mit Hilfe eines Mikroschalters 13 kann die Stellung des Riegels 7 detektiert werden, um beispielsweise in Abhängigkeit hiervon einen Ladevorgang zu ermöglichen. Der Riegel 7 wird mit Hilfe eines elektrischen Antriebs aus seiner verriegelnden Stellung im Anschluss an ein Aufladen heraus bewegt. Zu diesem Zweck gibt es einen Motor 31, der eine Schnecke 32 antreibt. Die Schnecke 32 verdreht ein Ritzel 33, das mit einem Vorsprung 34 versehen ist. Der Vorsprung 34 kann so ein Ende 35 des Riegels 7 verschwenken, dass hierdurch der Riegel 7 aus seiner verriegelnden Stellung gemäß Figur 5b in seine nichtverriegelnde Stellung gemäß Figur 5a bewegt werden kann.

### Bezugszeichenliste

- 1:: Ladeeinrichtung eines Elektrofahrzeugs,
- 2:: Ladeeinrichtung einer Ladestation
- 3:: Gehäuse
- 4:: Gehäuse
- 5:: elektrischer Kontaktstift
- 6:: elektrische Kontaktbuchse
- 7:: Riegel
- 8:: Riegelöffnung
- 9:: Halteöffnung
- 10:: Verriegelungssteg
- 11:: Mikroschalter
- 12:: Taste
- 13:: Mikroschalter
- 14:: Taste
- 15:: Hebel
- 16:: Abschirmung
- 17:: Achse
- 18:: Vorsprung
- 19:: Spindelmutter
- 20:: elektrischer Antrieb
- 21:: verbreitertes Riegelende
- 22:: Bolzen 22
- 23:: Durchgangsöffnung
- 24:: Mikroschalter
- 25:: Hebelende
- 26:: Hebelnase
- 27:: Riegelbolzen
- 28:: Achse
- 29:: seitlich abstehenden Bolzen
- 30:: Langloch
- 31:: Motor
- 32:: Schnecke 32
- 33:: Ritzel
- 34:: Vorsprung
- 35:: Riegelende

## Patentansprüche

1. System umfassend eine Ladeeinrichtung (1) für ein Elektrofahrzeug und eine weitere Ladeeinrichtung (2), wobei die Ladeeinrichtung (1) so beschaffen ist, dass diese mit der weiteren Ladeeinrichtung (2) mit Halteöffnung (9) verbunden und die Verbindung verriegelt werden kann, wenn die weitere Ladeeinrichtung (2) vollständig in die Ladeeinrichtung (1) hineingesteckt worden ist,
mit einem Riegel (7) für ein Verriegeln der mechanischen Verbindung zwischen der Ladeeinrichtung (1) und der weiteren Ladeeinrichtung (2) durch Bewegen eines Endes des Riegels (7) in die Halteöffnung (9), wobei, eine Einrichtung vorgesehen ist, die im Fall einer beschädigten Halteöffnung (9) der weiteren Ladeeinrichtung (2) ein Bewegen des Riegels (7) in Richtung seiner Verriegelungsstellung zu verhindern vermag, wenn die weitere Ladeeinrichtung (2) vollständig in die Ladeeinrichtung (1) hineingesteckt worden ist, **dadurch gekennzeichnet, dass**
die Ladeeinrichtung (1) einen Hebel (15) umfasst, der von einer Ausgangsstellung ausgehend durch einen Verriegelungssteg (10) der Halteöffnung (9) in eine Endstellung bewegt werden kann, und der erst in der Endstellung ein Verriegeln der mechanischen Verbindung zwischen der Ladeeinrichtung (1) und der weiteren Ladeeinrichtung (2) mittelbar oder unmittelbar ermöglicht, wobei die Ladeeinrichtung (1) so eingerichtet ist, dass nur im Anschluss an das Verriegeln eine Batterie des Elektrofahrzeugs aufgeladen wird.

2. System nach Anspruch 1, **gekennzeichnet dadurch, dass** der Hebel (15) durch Bewegen in die Endstellung ein Aufladen der Batterie mittelbar oder unmittelbar ermöglicht.

3. System nach Anspruch 2, **dadurch gekennzeichnet, dass** der Hebel (15) in der Ausgangsstellung das Bewegen des Riegels (7) in seine verriegelnde Stellung blockiert, nicht aber in seiner Endstellung.

4. System nach dem vorhergehenden Anspruch 3, **dadurch gekennzeichnet, dass** der Hebel (15) mit Hilfe eines Langlochs (30), einer seitlich abstehenden Abschirmung (16) oder einer Nase zu blockieren vermag, oder dass der Hebel (15) in seiner Endstellung einen Durchlass (23) für den Riegel zur Halteöffnung (9) umfasst.

5. System nach einem der vorhergehenden Ansprüche 2 bis 4, **dadurch gekennzeichnet, dass**
der Hebel mechanisch, insbesondere durch eine vorgespannte Feder, in die Ausgangsstellung bewegt werden kann.

6. System nach einem der vorhergehenden Ansprüche 2 bis 5, **gekennzeichnet durch** eine Nase (26) des Hebels (15), die in einer Endstellung des Hebels (15) von dem Riegel (7) für ein Verschwenken des Hebels erfasst werden kann.

7. System nach einem der vorhergehenden Ansprüche 2 bis 6 mit einem Mikroschalter (24), der eine Ausgangsstellung des Hebels (15), eine Endstellung des Hebels (15) sowie mittelbar eine Verriegelungsstellung des Riegels (7) zu detektieren und insbesondere in Anhängigkeit davon Bewegungsabläufe zu steuern, insbesondere zu starten und/ oder zu stoppen vermag und zwar insbesondere Bewegungsabläufe des Riegels (7).

8. System nach einem der vorhergehenden Ansprüche, **dadurch gekennzeichnet, dass**
die eine Ladeeinrichtung Teil eines Elektrofahrzeugs ist.

9. Verfahren für ein Aufladen eines Elektrofahrzeugs mit einem System nach einem der vorhergehenden Ansprüche,
gemäß dem die eine Ladeeinrichtung (1) mit der weiteren Ladeeinrichtung (2) verbunden wird, ein Verriegelungssteg (10) der Halteöffnung (9) einen Hebel (15) der Ladeeinrichtung (1) so bewegt, dass dadurch ein Verriegeln einer mechanischen Verbindung zwischen den beiden Ladeeinrichtungen ermöglicht und/ oder durchgeführt wird.

10. Verfahren nach dem vorhergehenden Anspruch,
bei dem nur im Anschluss an das Verriegeln die Batterie des Elektrofahrzeugs aufgeladen wird.

## Claims

1. System comprising
a charging device (1) for an electric vehicle and an additional charging device (2), wherein the charging device (1) is designed such that it can be connected with an additional charging device (2) with a retaining opening (9) and the connection can be locked, if the additional charging device (2) is fully inserted into the first charging device (1),
having a bolt (7) for locking the mechanical connection between the first charging device (1) and the additional charging device (2) by moving an end of the bolt (7) into the retaining opening (9), wherein a device is provided that, in the case of a damaged retaining opening (9) of the additional charging device (2), is able to prevent a movement of the bolt (7) in the direction of its locking position, if the additional charging device (2) is fully inserted into the first charging device (1),
**characterized in that**
the charging device (1) comprises a lever (15) that can be moved starting from a starting position through a locking bar (10) of the retaining opening (9) into an end position, and which enables an indirect or direct locking of the mechanical connection between the charging device (1) and the additional charging device (2) only in the end position,
wherein the charging device (1) is embodied so that a battery of the electric vehicle is only charged after the locking.

2. System according to claim 1,
**characterized in that**
the lever (15) enables an indirect or direct charging of the battery by moving into the end position.

3. System according to claim 2,
**characterized in that**
the lever (15) blocks a movement of the bolt (7) in the starting position, but not in its end position.

4. System according to the preceding claim 3,
**characterized in that**
the lever (15) is capable of blocking by means of an elongated hole (30), a laterally projecting shield, or a lug, or **in that** the lever (15) in its end position comprises a passage (23) towards the retaining opening (9) for the bolt.

5. System according to one of the preceding claims 2 to 4,
**characterized in that**
the lever (15) can be moved mechanically, specifically by a pre-tensioned spring, into the starting position.

6. System according to one of the preceding claims 2 to 5,
**characterized by**
a lug (26) of the lever (15), which in an end position of the lever (15) can be engaged by the bolt (7) for a pivoting of the lever (15).

7. System according to one of the preceding claims 2 to 6,
having a micro switch (24) that is capable of detecting a starting position of the lever (15), an end position of the lever (15) and, indirectly, a locking position of the bolt (7), and is further capable, specifically in response thereto, of controlling movement processes, specifically the starting and/or stopping of the same, and specifically movement processes of the bolt (7).

8. System according to one of the preceding claims,
**characterized in that**
the charging device is part of an electric vehicle.

9. A method for charging an electric vehicle with a system according to one of the preceding claims, according to which the charging device (1) is connected with an additional charging device (2), where a locking bar (10) of the retaining opening (9) moves a lever (15) of the charging device (1) so as to make possible and/or perform a locking of a mechanical connection between the two charging devices.

10. Method according to claim 9,
wherein the battery of the electric vehicle is charged only after the locking.

## Revendications

1. Système comprenant un dispositif de charge (1) pour un véhicule électrique et un autre dispositif de charge (2), dans lequel le dispositif de charge (1) est tel qu'il peut être relié à l'autre dispositif de charge (2) avec une ouverture de retenue (9) et la connexion peut être verrouillée lorsque l'autre dispositif de charge (2) a été complètement inséré dans le dispositif de charge (1),
avec un boulon (7) pour un verrouillage de la liaison mécanique entre le dispositif de charge (1) et l'autre dispositif de charge (2) en déplaçant une extrémité du boulon (7) vers l'intérieur de l'ouverture de retenue (9),
dans lequel,
il est prévu un dispositif qui, en cas d'ouverture de retenue (9) endommagée du dispositif de l'autre chargement (2), est capable d'empêcher le boulon (7) de se déplacer dans la direction de sa position de verrouillage lorsque l'autre dispositif de charge (2) a été complètement inséré dans le dispositif de charge (1),
**caractérisé en ce que**
le dispositif de charge (1) comprend un levier (15) qui peut être déplacé d'une position initiale à travers une bande de verrouillage (10) de l'ouverture de retenue (9) vers une position finale et qui, uniquement dans la position finale, permet de verrouiller directement ou indirectement la liaison mécanique entre le dispositif de charge (1) et l'autre dispositif de charge (2),
dans lequel le dispositif de charge (1) est agencé de telle sorte qu'une batterie du véhicule électrique ne soit chargée qu'à la suite du verrouillage.

2. Système selon la revendication 1, **caractérisé en ce que** le levier (15) permet de charger la batterie indirectement ou directement en le déplaçant vers la position finale.

3. Système selon la revendication 2, **caractérisé en ce que**
le levier (15), dans sa position de départ, bloque le mouvement du boulon (7) dans sa position de verrouillage, mais pas dans sa position finale.

4. Système selon ka revendication précédente 3
**caractérisé en ce que**
le levier (15) est capable de bloquer au moyen d'un trou oblong (30) d'un bouclier (16) faisant saillie latéralement ou d'un nez, ou **en ce que**, dans sa position finale, le levier (15) comprend un passage (23) pour le boulon à l'ouverture de retenue (9).

5. Système selon l'une des revendications précédentes 2 à 4,
**caractérisé en ce que**
le levier peut être déplacé mécaniquement, en particulier par un ressort précontraint, vers sa position initiale.

6. Système selon l'une des revendications précédentes 2 à 5,
**caractérisé par**
un nez (26) du levier (15), qui, dans un position finale du levier (15), peut être saisi par le boulon (7) pour un pivotement du levier.

7. Système selon l'une des revendications précédentes 2 à 6,
avec
un microrupteur (24) capable de détecter une position initiale du levier (15), une position finale du levier (15) et indirectement une position de verrouillage du boulon (7) et, en particulier en fonction de ceux-ci, de commander, en particulier de démarrer et/ou d'arrêter des séquences de mouvements, en particulier des séquences de mouvements du boulon (7).

8. Système selon l'une des revendications précédentes,
**caractérisé en ce que**
ledit un dispositif de charge fait partie d'un véhicule électrique.

9. Procédé de charge d'un véhicule électrique avec un système selon l'une des revendications précédentes,
selon lequel ledit un dispositif de charge (1) est relié à l'autre dispositif de charge (2), une bande de verrouillage (10) de l'ouverture de retenue (9) déplace un levier (15) du dispositif de charge (1) de telle sorte qu'un verrouillage d'une liaison mécanique entre les deux dispositifs de charge est rendu possible et/ou réalisé.

10. Procédé selon la revendication précédente,
dans lequel la batterie du véhicule électrique n'est chargée qu'après le verrouillage.
